Europäisches Patentamt

European Patent Office

Office européen des brevets

(19)

(11) Veröffentlichungsnummer : **0 334 302 B1**

(12) # EUROPÄISCHE PATENTSCHRIFT

(45) Veröffentlichungstag der Patentschrift :
**16.09.92 Patentblatt 92/38**

(51) Int. Cl.⁵ : **F01C 1/30**, F02B 75/36

(21) Anmeldenummer : **89105062.7**

(22) Anmeldetag : **21.03.89**

(54) **Arbeitsmaschine mit mindestens zwei Arbeitskammern mit veränderlichem Volumen.**

(30) Priorität : **22.03.88 DE 3809478**
**28.04.88 DE 3814311**

(43) Veröffentlichungstag der Anmeldung :
**27.09.89 Patentblatt 89/39**

(45) Bekanntmachung des Hinweises auf die
Patenterteilung :
**16.09.92 Patentblatt 92/38**

(84) Benannte Vertragsstaaten :
**DE FR GB IT SE**

(56) Entgegenhaltungen :
**FR-A- 2 500 083**
**US-A- 4 353 331**

(73) Patentinhaber : **Nakhmanson, Raoul S. Dr**
**Sauerbruchstrasse 49**
**W-6204 Taunusstein (Neuhof) (DE)**

(72) Erfinder : **Nakhmanson, Raoul S. Dr**
**Sauerbruchstrasse 49**
**W-6204 Taunusstein (Neuhof) (DE)**

(74) Vertreter : **Dr. Fuchs, Dr. Luderschmidt**
**Dipl.-Phys. Seids, Dr. Mehler Patentanwälte**
**Abraham-Lincoln-Strasse 7**
**W-6200 Wiesbaden (DE)**

EP 0 334 302 B1

Jouve, 18, rue Saint-Denis, 75001 PARIS

## Beschreibung

Die Erfindung betrifft eine Arbeitsmaschine mit mindestens zwei Arbeitskammern mit veränderlichem Volumen und mindestens einer Einlaßöffnung und einer Auslaßöffnung für gasförmige oder flüssige Medien, einer ersten feststehenden platte und einer zweiten, parallel zur ersten platte angeordneten und zu dieser beabstandeten zweiten platte und einer Vielzahl von zwischen der ersten und zweiten platte angeordneten länglichen Wandelementen, die gleitend, abdichtend an der ersten und zweiten platte anliegen und zusammen mit der ersten und zweiten platte die Arbeitskammern bilden.

Der Anwendungsbereich der erfindungsgemäßen Maschine umfaßt die Einsatzbereiche von Kraftstoffverbrennungsmotoren, Dampfmaschinen oder druckgetriebenen Maschinen (durch Gase oder Flüssigkeiten) und die Einsatzbereiche von pumpen für gasförmige und flüssige Medien.

Bei den herkömmlichen Kraftstoffverbrennungsmaschinen (Kolbenmaschinen) wird eine oszillierende Bewegung der Kolben in eine rotierende Bewegung der Kurbelwelle umgesetzt. Nachteilig bei diesen Kraftstoffverbrennungsmaschinen ist die Tatsache, daß Ventile, eine Kurbelwelle und eine Nockenwelle vorhanden sein müssen. Da eine oszillierende Bewegung von Teilen immer mit einem Abbremsen und Beschleunigen von Massen verbunden ist, was einerseits den Wirkungsgrad mindert und andererseits zu einer erhöhten Beanspruchung der Bauteile des Motors führt, wurden die sogenannten Rotationskolbenmotore entwickelt, die nur noch rotierende Teile aufweisen.

Diese Rotationskolbenmaschinen weisen ebenso wie die Kolbenmaschinen abgeschlossene Arbeitsräume mit starren Wänden auf, von denen mindestens eine so bewegt wird, daß sich ein veränderliches Volumen des Arbeitsraumes ergibt. Der veränderliche Arbeitsraum wird zwischen dem Leistungsteil (das ist der die Leistung übertragende Kolben) und dem keine Leistung übertragenden Absperrteil gebildet. Die Rotationskolbenmotoren werden eingeteilt in Drehkolben-, Kreiskolben- und Umlaufkolbenmotore.

Ein solcher Drehkolbenmotor ist aus der US-A-4 353 331 bekannt. Diese offenbart eine Arbeitsmaschine mit zumindest zwei Arbeitskammern mit veränderlichem Volumen und zumindest einer Einlaßöffnung und einer Auslaßöffnung für gasförmige oder flüssige Medien und einem oszillierenden Kolben, wobei eine erste feststehende platte und eine zweite, parallel zur ersten angeordnete zweite platte vorgesehen sind, und mit zwischen der ersten und der zweiten platte angeordneten beweglichen Wandelementen, die gleitend abdichtend an diesen anliegen und gemeinsam mit der ersten und zweiten platte die Arbeitskammern bilden. An einem der beweglichen Wandelemente ist eine Schwungmasse angebracht.

Nachteilig bei der Drehkolbenmaschine als auch bei der Kreiskolbenmaschine ist, daß ihre Massenkräfte durch Gegengewichte nach außen ausgeglichen werden müssen. Beim Drehkolbenmotor ist wegen des sich drehenden Absperrteils die Zufuhr des Frischgases und die Abfuhr der Abgase schwierig, weshalb sich als Rotationskolbenmotor nur der nach dem Prinzip eines Kreiskolbenmotors arbeitende Wankelmotor durchgesetzt hat. Das größte Problem des Wankelmotors ist jedoch die einwandfreie Abdichtung der Arbeitskammern. Weitere Nachteile bestehen darin, daß lediglich ca. 6 % des Gesamtvolumens als nutzbares Volumen für die Arbeitsräume zur Verfügung stehen, daß durch die Rotation der Wankelscheibe der Motor eine Unwucht aufweist und daß zur Kraftübertragung ebenfalls eine Kurbelwelle sowie zusätzlich Zahnräder notwendig sind.

Weitere Nachteile be im Kolbenmotor bestehen darin, daß beim Betrieb des Motors die in den Kolben entstehende Hitze über Kolbenringe geringen Querschnittes abgeführt werden muß, weil der Zylinderdurchmesser bei thermischen Dimensionsänderungen nicht angepaßt werden kann.

Auch beim Wankelmotor sind zur Abdichtung einerseits Dichtleisten an den Ecken des Drehkolbens und außerdem Dichtelemente an den Seitenflächen des Drehkolbens erforderlich, weil der Abstand der Seitenwände nicht verändert werden kann. In beiden Fällen bilden die Dichtelemente einen großen Wärmeableitungswiderstand, weswegen die Kühlung der Kolben bzw. des Rotors nicht so effektiv sein kann, wie an sich erwünscht.

Aufgabe der Erfindung ist daher eine Maschine, die beim Einsatz als Krafstoffverbrennungsmaschine die o.g. Nachteile nicht aufweist, und die sich durch eine einfache und kompakte Bauweise sowie höheren Wirkungsgrad auszeichnet.

Die Aufgabe wird mit einer Maschine gelöst, die dadurch gekennzeichnet ist, daß
– die zweite platte durch ihre zentrale Achse bezüglich der ersten platte drehbar gelagert ist,
– ein bewegliches Gitter, das aus mindestens acht Wandelementen gebildet ist, wobei jedes Wandelement an seinen Endpunkten (Gelenkpunkten) mit mindestens einem weiteren Wandelement gelenkig abdichtend verbunden ist, mit mindestens einem innenliegenden Endpunkt an der ersten platte und mit mindestens zwei außenliegenden Endpunkten an der zweiten platte derart gelenkig abdichtend befestigt ist, daß bei Rotation der platte die Arbeitskammern abwechselnd ihr minimales und maximales Volumen einnehmen, und
– eine Welle in der Drehachse der zweiten platte befestigt ist.

EP 0 334 302 B1

Vorzugsweise weisen alle Wandelemente die gleiche Baulänge auf.

Die Einlaßöffnung(en) und die Auslaßöffnung(en) sind in der ersten platte angebracht.

Gemäß einer besonderen Ausführungsform weisen die Wandelemente Hantelform auf und bestehen aus einem länglichen Mittelteil, an dessen beiden Enden in den Gelenkpunkten ein Gelenkteil angeformt ist, wobei dieses Mittelteil in Seitenansicht vorzugsweise rechteckig und in Draufsicht rautenförmig ausgebildet ist.

Der Mittelteil kann aber auch aus mindestens zwei rautenförmigen Elementen bestehen, die unterschiedliche Winkel aufweisen. So kann beispielsweise das eine rautenförmige Element vollkommen spitz an den Gelenkteilen zulaufen, während das andere rautenförmige Element dort noch eine bestimmte Breite aufweist und die eigentliche Verbindung mit den Gelenkteilen bildet. Die Anordnung dieser Elemente beim benachbarten Wandelement ist dann hieran anzupassen, damit die Bewegungsfreiheit der zusammenwirkenden Wandelemente nicht eingeschränkt wird.

Die Rautenform ist, wie später noch anhand der Zeichnungen eingehender erläutert wird, deshalb erforderlich, damit sich die Wandelemente mit einem möglichst großen Bereich ihrer Fläche aneinanderlegen können, wenn die Arbeitskammern ihr minimales Volumen annehmen.

Das Mittelteil der im Gitter außenliegenden Wandelemente ist im Bereich der Gelenkteile verstärkt ausgebildet, um den auf die Wandelemente wirkenden Kräften besser standhalten zu können.

Die sich im Befestigungspunkt befindlichen Gelenkteile besitzen einen größeren Durchmesser als die übrigen Gelenkteile.

Das Gelenkteil weist zylindrische Gestalt auf und besteht aus mindestens einer Scheibe, die derart ausgebildet und angeordnet ist, daß sie an mindestens einer Scheibe des/der Gelenkteils/teile eines oder mehrerer benachbarter Wandelemente formschlüssig anliegt, so daß die jeweilige Arbeitskammer abdichtend verschlossen ist.

Wenn in zwei benachbarten Wandelementen die Gelenkteile jeweils nur aus einer Scheibe bestehen, dann sind diese entsprechend versetzt angeordnet.

Die Summe der beiden Scheibendicken muß der Breite der Wandelemente entsprechen, damit die jeweilige Arbeitskammer nach außen abdichtend verschlossen ist.

Bestehen die Gelenkteile aus mehreren parallel nebeneinander und im Abstand angeordneten Scheiben, ist die Dicke und der Abstand der Scheiben der zu verbindenden Gelenkteile so zu wählen, daß diese formschlüssig ineinander greifen. Auch hier muß die Summe der Scheibendicken gleich der Breite der Wandelemente entsprechen.

Alle Scheiben können gemäß einer Ausführungsform im Gelenkpunkt mit einem zentralen Loch versehen sein, durch das ein Gelenkbolzen oder eine Gelenkhülse gesteckt wird, der die beiden Gelenkteile und damit die Wandelemente drehbar zusammenhält. Der Gelenkbolzen kann auch an einer Scheibe eines Gelenkteils angeformt sein, der dann in einer entsprechenden Bohrung oder Öffnung der Scheibe eines benachbarten Wandelements eingreift.

Je nach Anordnung des Gitters kann es erforderlich sein, auch mehr als zwei Gelenkteile miteinander zu verbinden. Dem wird dadurch Rechnung getragen, daß die Anzahl, die Breite und der Abstand der Scheiben entsprechend aufeinander abgestimmt wird. Entscheidend ist hierbei, daß über die gesamte Breite des Wandelementes Scheiben angeordnet sind, so daß nach dem Einbau zwischen die Platten die Kammern nach außen vollständig gas- und druckdicht sind. Dazu ist es weiterhin erforderlich, daß die Scheiben der zu verbindenden Gelenkteile paßgenau ineinandergreifen.

Gegebenenfalls können die Scheibenflächen mit einer Gleitschicht versehen sein, die auch gleichzeitig eine Dichtfunktion übernimmt.

Auch die Platten und die Längsseiten der Mittelteile, die an den Platten an liegen und an den Platten entlanggleiten, müssen derart plan bearbeitet sein, daß die Arbeitskammern nach außen abgedichtet sind. diesem Zweck können diese Flächen zusätzlich ebenfalls mit einer Gleitschicht belegt sein, die auch gleichzeitig die Dichtfunktion übernimmt.

Die Befestigungspunkte des Gitters an den platten sind jeweils Gelenkpunkte der Wandelemente.

Die Anzahl der Wandelemente richtet sich nach der gewünschten Zahl und der Gestalt der Arbeitskammern. So ist es möglich, mit neun Wandelementen ein Gitterwerk aufzubauen, das nach dem Einfügen zwischen die Platten zusammen mit diesen platten drei Arbeitskammern bildet. Mit zehn Wandelementen läßt sich ein Gitter aufbauen, das nach dem Einbau zwischen die Platten zwei großvolumige Arbeitskammern bildet.

In besondere Ausführung sind zwölf Wandelemente derart zu einem Gitter zusammengebaut, daß vier Arbeitskammern gebildet sind, wobei das Gitter mit den Befestigungspunkten derart an den platten befestigt ist, daß bei Rotation der platte die punkte auf einem bezüglich des Punktes erzentrischen Kreis A umlaufen.

Da alle Wandelemente die gleiche Baulänge aufweisen, läßt sich aus diesen zwölf Wandelementen, die mit ihren Gelenkteilen verbunden werden, ein Gitter mit vier rautenförmigen Kammern aufbauen, wobei jeweils zwei gegenüberliegende Kammern gleiche Gestalt aufweisen.

3

In diesem Gitter gibt es einen Punkt (mittlerer Punkt), in dem vier Wandelemente miteinander verbunden sind, vier Punkte, in denen drei Wandelemente und vier Punkte, in denen zwei Wandelemente verbunden sind.

Die in diesem mittleren Punkt verbundenen Wandelemente bilden die inneren Wandelemente und sind an ihrem jeweils anderen Ende mit den außenliegenden Wandelementen verbunden. Zwischen jeweils zwei außenliegenden Gelenkpunkten zweier innenliegender Wandelemente sind jeweils zwei miteinander verbundene außenliegende Wandelemente verbunden.

Das Gitter wird mit diesem mittleren Punkt an der feststehenden platte und mit zwei gegenüberliegenden Punkten, in denen lediglich zwei außenliegende Wandelemente verbunden sind, an der drehbaren platte befestigt.

Der Abstand $d_l$ der Drehachse der Platte zum Befestigungspunkt ist kleiner/gleich $\sqrt{L^2-R^2}-R$ , wobei L der Abstand zweier Gelenkpunkte eines Wandelementes und R der Radius der Gelenkteile ist. Der Abstand $d_2$ der Befestigungspunkte ist gleich $2\sqrt{L^2-R^2} + 2R$.

Da sich im Mittelpunkt und in den Eckpunkten jeweils Gelenkteile mit Gelenkhülsen befinden, kann die Befestigung auf einfache Weise dadurch erfolgen, daß in die Gelenkhülsen Bolzen gesteckt werden, die mit den Platten fest verbunden sind.

Die Drehachse der drehbaren platte befindet sich in der Mitte zwischen den beiden Befestigungspunkten des Gitters an dieser Platte und im Abstand zu dem Mittelpunkt des Gitters bzw. zum Befestigungspunkt des Gitters an der feststehenden Platte. Die Drehachse liegt parallel zu den Gelenkachsen (Längsachse der Gelenkteile) aller Wandelemente. Wird nach dem Zusammenbau die drehbare Platte um diese Drehachse gedreht, so bewegen sich alle Wandelemente gleitend in jeweils unterschiedlicher Weise über die Kontaktflächen der Platten, wodurch die Volumina der Arbeitskammern zwischen Minimum und Maximum verändert werden. Das Verhältnis von minimalem zu maximalem Volumen einer Arbeitskammer kann bis zu 1:10 und mehr betragen. Während einer Umdrehung nimmt jede Arbeitskammer zweimal ihr maximales Volumen ein. Wenn zwei gegenüberliegende Kammern ihr minimales Volumen an nehmen, nehmen die beiden anderen Arbeitskammern ihr maximales Volumen ein.

Während der Rotation der drehbaren platte bewegen sich die Befestigungspunkte der drehbaren Platte aufgrund der oben erläuterten Anordnung auf einem bezüglich des mittleren Punktes, der mit dem Befestigungspunkt der feststehenden Platte identisch ist, exzentrisch angeordneten Kreis. Auf der gleichen Kreisbahn bewegen sich auch die beiden übrigen außenliegenden Gelenkpunkte des rautenförmigen Gitters, in dem lediglich zwei außen liegende Wandelemente verbunden sind.

Der Vorteil dieser Maschine liegt unter anderem darin, daß der Schwerpunkt des Gitters während der Rotation seine Position nicht verändert und immer zwischen der Drehachse der drehbaren Platte und dem Befestigungspunkt der feststehenden Platte liegt. Auch der Schwerpunkt der 4 inneren Wandelemente und der Schwerpunkt der übrigen 8 außenliegenden Wandelemente liegt fest, ist aber nicht identisch. Dadurch können die inneren und die äußeren Wandelemente unterschiedliche Gestalt aufweisen, wodurch wiederum der Schwerpunkt des Gitters in gewünschter Weise verschoben werden kann. Der Vorteil der erfindungsgemäßen Maschine liegt darin, daß sie sich durch große Laufruhe auszeichnet. Durch die große Kontaktfläche zwischen den Wandelementen und den beiden Platten kann die Reibungs- und Verbrennungswärme durch Kühlung der Platte auf einfache Weise abgeführt werden.

Soll die Maschine als Kraftstoffverbrennungsmotor zum Einsatz kommen, so ist in der feststehenden Platte eine Einlaßöffnung angebracht, die zum Zuführen von Kraftstoff, der flüssig oder gasförmig sein kann, in die jeweilige Arbeitskammer ausgebildet ist. Weiterhin ist in der feststehenden Platte eine Auslaßöffnung vorgesehen, die zum Austritt der Abgase aus der Arbeitskammer ausgebildet ist. Der Motor weist außerdem ebenfalls in der feststehenden Platte eine Zündeinrichtung auf, beispielsweise eine Zündkerze, mit der der Kraftstoff, nachdem er verdichtet worden ist, gezündet werden kann. An welcher Stelle die Einlaß- und Auslaßöffnung und die Zündeinrichtung anzuordnen sind, weiß der Fachmann, der sich mit der Entwicklung von Verbrennungsmotoren befaßt.

Soll die Maschine als Dieselmotor verwendet werden, dann sind in der feststehenden Platte eine oder mehrere Öffnungen für die Einspritzung des Dieselkraftstoffs erforderlich ist.

Die an der drehbaren Platte befestigte Welle ist in diesem Anwendungsfall als Antriebswelle, für die Räder eines Kraftfahrzeuges, ausgebildet.

Ein derartiger, mit vier Arbeitskammern ausgestatteter Motor arbeitet als sogenannter Viertaktmotor. Innerhalb einer Umdrehung der drehbaren Platte durchläuft jede der vier Arbeitskammern alle vier Takte. Beliebig viele dieser erfindungsgemäßen Motoren können auf platzsparende Weise nebeneinander zu einem Hochleistungstriebwerk an geordnet sein.

Zur Erhöhung der Kompression kann einem Motor ein weiterer Motor, beispielsweise nach dem Prinzip des Rolls-Royce-Wankel-Diesel in Reihe vorgeschaltet sein.

Der Motor unterscheidet sich von den herkömmlichen Drehkolbenmotoren dadurch, daß die Arbeitskammer nicht zwischen einem feststehenden Gehäuse und einem darin umlaufenden Kolben gebildet werden, sondern direkt zwischen den Wandelementen, so daß ein Gehäuse mit komplizierter Innenraumgestaltung völlig entfällt. Dadurch, daß die Einlaß- und Auslaßöffnungen von den Seitenflächen der Wandelemente während ihrer Rotation geöffnet und verschlossen werden, entfallen Ventile, die bei den herkömmlichen Motoren erforderlich sind. Auch eine Kurbelwelle entfällt, da die an der drehbaren Platte befestigte Welle als Ausgangswelle und damit als Antriebswelle für beispielsweise ein Kraftfahrzeug eingesetzt werden kann.

Das Fehlen eines Gehäuses bietet darüberhinaus die Möglichkeit, den Abstand zwischen der feststehenden Platte und der drehbaren Platte variabel zu halten. Durch Vergrößern des Abstandes der beiden Platten und das Einsetzen breiterer Wandelemente kann ein Motor auf einfache Weise in einem Motor mit größeren Arbeitskammern umgebaut werden.

Außerdem kann beim Betrieb des Motors der Abstand der Platten für jeden Betriebszustand optimal eingestellt werden. Mit der Erwärmung der Wandelemente geht eine Längen- und Breitenausdehnung dieser Wandelemente einher, die eine Anpassung des Plattenabstandes erforderlich macht. Wegen dieser Möglichkeit können die gegeneinanderbewegten Berührungsflächen schon bei der Fertigung in hoher Oberflächengüte ausgeführt werden.

Gemäß einer Ausführungsform sind Zuleitungen vom Abgasauslaß zur Grundplatte oder einer entsprechenden anderen oder weiteren Abstandsbefestigung der beiden Platten vorgesehen, so daß diese in gleicher Weise erwärmt werden und sich ausdehnen wie die Wandelemente.

Gemäß einer weiteren Ausführungsform ist die Grundplatte zwei- oder mehrteilig ausgebildet und über bekannte Stellelemente wird der Abstand zwischen den Platten gezielt eingestellt. Auf diese Weise ist es möglich, den Außendruck auf die Wandelemente so zu optimieren, daß einerseits die Reibung zwischen den Wandelementen und den Platten möglichst gering ist und andererseits die Arbeitskammern noch dicht sind. Diese gezielte Einstellung des Plattenabstandes kann auch dadurch erreicht werden, daß die Grundplatte oder eine andere entsprechende Abstandshalterung der beiden Platten mit einer Heizeinrichtung versehen ist.

Gemäß einer weiteren Ausführungsform ist die Grundplatte aus einem solchen Material gefertigt und in der Weise ausgebildet, daß die gezielte Ausdehnung der Platte auf bekannte Weise durch Elektrostriktion oder Magnetostriktion herbeigeführt werden kann.

Es besteht aufgrund der scheibenförmigen äußeren Gestalt der Maschine auch die Möglichkeit, die Maschine als Motor direkt in die Antriebsräder zu integrieren.

Die erfindungsgemäße Maschine kann auch als pumpe für gasförmige und flüssige Medien eingesetzt werden. Zu diesem Zweck ist die Welle, die an der drehbaren Platte befestigt ist, als Antriebswelle, die an einen Fremdantrieb angeschlossen ist, ausgebildet. In diesen Anwendungsfällen sind in der feststehenden Platte auf einem Kreis vier Öffnungen angebracht, wovon zwei Öffnungen als Einlaßöffnungen und zwei Öffnungen als Auslaßöffnungen für das zu pumpende Medium ausgebildet sind.

Der Motor bzw. die Pumpe können in zwei Richtungen betrieben oder umgeschaltet werden.

Die Maschine kann neben der Verwendung als Kraftstoffverbrennungsmotor (Otto-Motor oder Dieselmotor) auch als Dampfmaschine oder druckgetriebene Maschine (mit Gasen oder Flüssigkeiten) eingesetzt werden. In diesen Anwendungsfällen sind in der feststehenden Platte auf einem Kreis vier Öffnungen angebracht, wovon zwei Öffnungen als Einlaßöffnungen und zwei Öffnungen als Auslaßöffnungen für das antreibende Medium ausgebildet sind. Die Maschine ist auf die genannten Anwendungsfälle nicht beschränkt sondern universell einsetzbar.

Die erfindungsgemäße Maschine wird nachfolgend anhand der Zeichnungen näher erläutert. Es zeigen

Figur I eine Vorderansicht der erfindungsgemäßen Maschine gemäß einer Ausführungsform;

Figur 2 eine Seitenansicht der in Figur I gezeigten Ausführungsform

Figur 3 eine Darstellung der Bewegung der Gelenkpunkte des gezeigten Gitters;

Figur 4 eine weitere Ansicht der in Figur I gezeigten Ausführungsform, wobei die drehbare Platte gegenüber der in Figur I gezeigten Stellung weitergedreht ist;

Figur 5a, b die Vorderansicht und die Seitenansicht zweier miteinander verbundener Wandelemente;

Figur 6 eine Ansicht des Gitters mit Wandelementen gemäß einer weiteren Ausführungsform;

Figur 7a, b eine Vorderansicht und eine Seitenansicht eines Wandelements gemäß einer weiteren Ausführungsform;

Figur 8 die Anordnung von vier Kraftstoffverbrennungsmotoren zu einem Antriebsaggregat;

Figur 9 eine Seitenansicht der Maschine gemäß einer weiteren Ausführungsform.

In der Figur I ist die erfindungsgemäße Maschine I in Vorderansicht dargestellt. Auf einer Grundplatte 9 ist eine feststehende Platte 2 und eine Halterung I0 befestigt. Es besteht die Möglichkeit, Platte 2 und Halterung I0 nach oben und seitlich so zu verlängern, daß ein stabiles Gehäuse entsteht. An der Halterung I0 ist die Platte

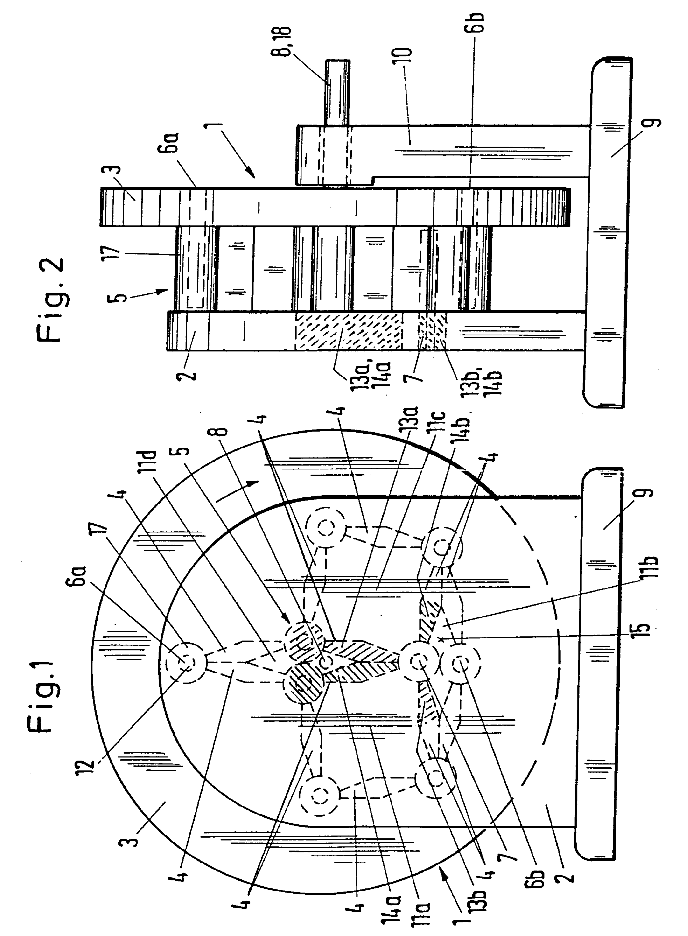

3 um ihre Achse 8 drehbar gelagert (Fig. 2). An dieser Platte 3 ist die Welle l8, die je nach Anwendungsgebiet als Antriebswelle oder als Ausgangswelle ausgebildet ist, befestigt. Zwischen den Platten 2 und 3 ist das Gitter 5 angeordnet, das aus insgesamt zwölf Wandelementen 4 aufgebaut ist.

Das Gitter kann beispielsweise wie folgt zusammengebaut werden: Zunächst werden vier Wandelemente 4 mit ihren jeweiligen Gelenkteilen l7 miteinander verbunden. Diese vier Wandelemente bilden die innenliegenden Wandelemente des Gitters 5. Mit den außenliegenden Gelenkteilen l7 dieser innenliegenden Wandelemente 4 werden die außenliegenden Wandelemente 4 in der Weise verbunden, daß zwischen jeweils zwei außenliegenden Gelenkteilen l7 zweier innenliegender Wandelemente 4 zwei außenliegende Wandelemente 4 angeordnet sind. Der Verbindungspunkt der vier innenliegenden Wandelemente 4 dient als Befestigungspunkt 7 für die Befestigung des Gitters 5 an der feststehenden Platte 2. Beliebige zwei gegenüberliegende Gelenkpunkte l2 der vier Gelenkpunkte, in denen zwei außenliegende Wandelemente 4 verbunden sind, werden als Befestigungspunkte 6a, 6b für die Befestigung des Gitters 5 an der drehbaren Platte 3 benutzt.

Im eingebauten Zustand bilden die Wandelemente 4 zusammen mit den Platten 2 und 3 die Arbeitskammern lla, llb, llc und lld. In der in Figur l gezeigten Konfiguration des Gitters 5 weisen die Arbeitskammern lla und llc ihr maximales Volumen auf, während die Arbeitskammern llb und lld ihr minimales Volumen aufweisen.

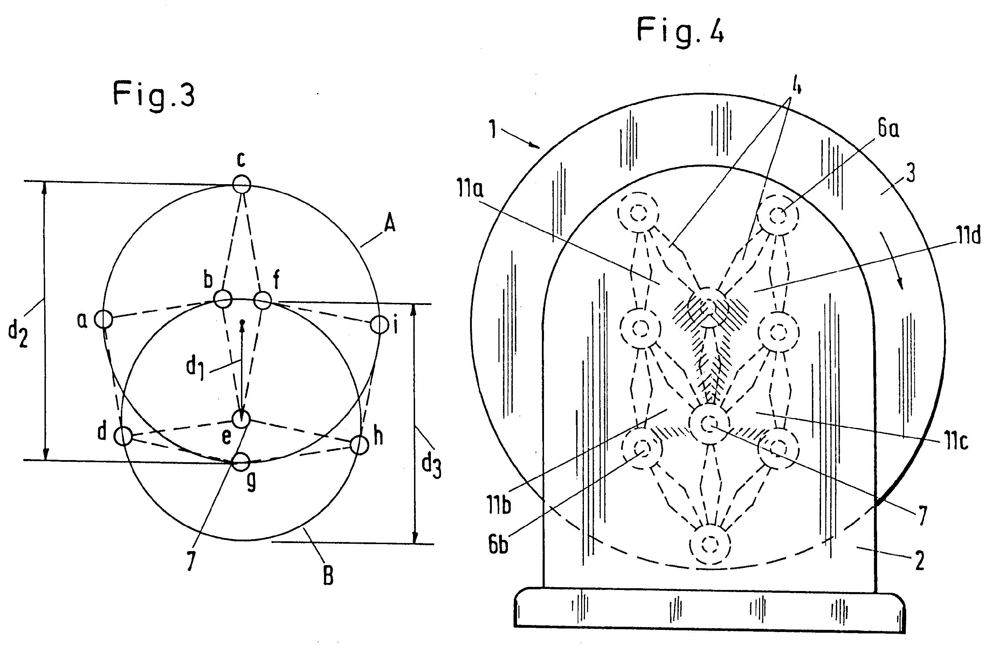

Wenn die Platte 3 um ihre Achse 8 in Pfeilrichtung gedreht wird, dann ändert sich die Anordnung der Wandelemente 4 zueinander. Bei einer Drehung gegenüber der in Figur l gezeigten Stellung nehmen die Wandelemente 4 die in der Figur 4 gezeigte Konfiguration an. In dieser Stellung weisen alle Kammern lla, llb, llc und lld gleiches Volumen auf. Nach einer weiteren Drehung in Pfeilrichtung (Drehung um 90° gegenüber der in Figur l gezeigten Stellung) nehmen die Kammern llb und lld ihr maximales Volumen an, während die Arbeitskammern lla und llc minimales Volumen annehmen. Die Konfiguration entspricht in diesem Fall wieder der in Figur l gezeigten, jedoch mit der Änderung, daß die Befestigungspunkte (6a, 6b) um einen Viertelkreis weitergewandert sind. Bei einer weiteren Drehung nimmt das Volumen der Kammern lla und llc wieder zu und das Volumen der Kammern llb und lld verringert sich wieder.

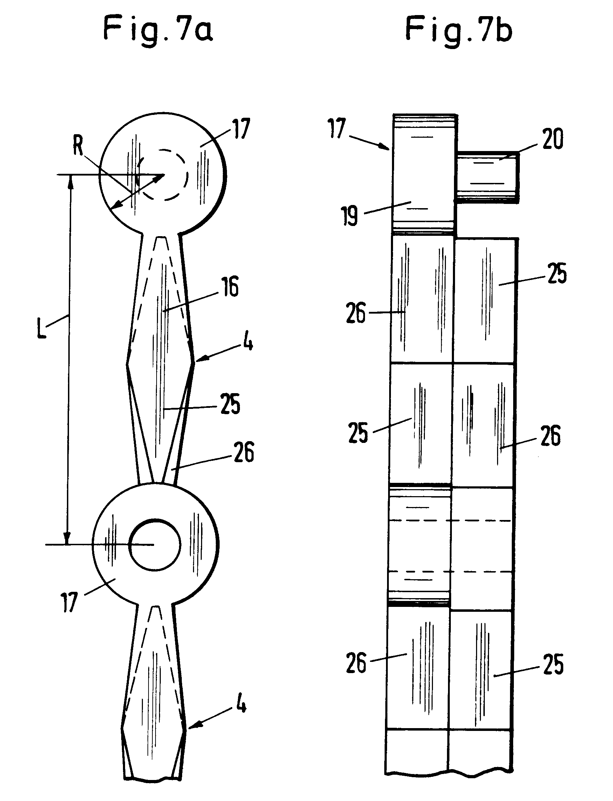

In der Figur 3 ist das Gitter in der in Figur l gezeigten Stellung sowie die Kreisbahnen der Gelenkteile dargestellt. Die Gelenkteile l7 sind mit den Buchstaben a-i bezeichnet. Die Gelenkteile in den Punkten b, f, h und d bewegen sich auf der Kreisbahn B und die Eckpunkte a, c, i und g bewegen sich auf der Kreisbahn A. Mit 7 ist wiederum der Befestigungspunkt des Gitters an der feststehenden Platte 2 bezeichnet. Der Durchmesser $d_3$ des Kreises B entspricht der doppelten Länge L eines Wandelementes 4 (siehe Figur 7a). Der Durchmesser $d_2$ und der Abstand $d_l$ sind ebenfalls in der Figur 3 eingezeichnet und werden durch die o.g. Formeln beschrieben. Der darin enthaltene Radius R ist ebenfalls in der Figur 7a dargestellt.

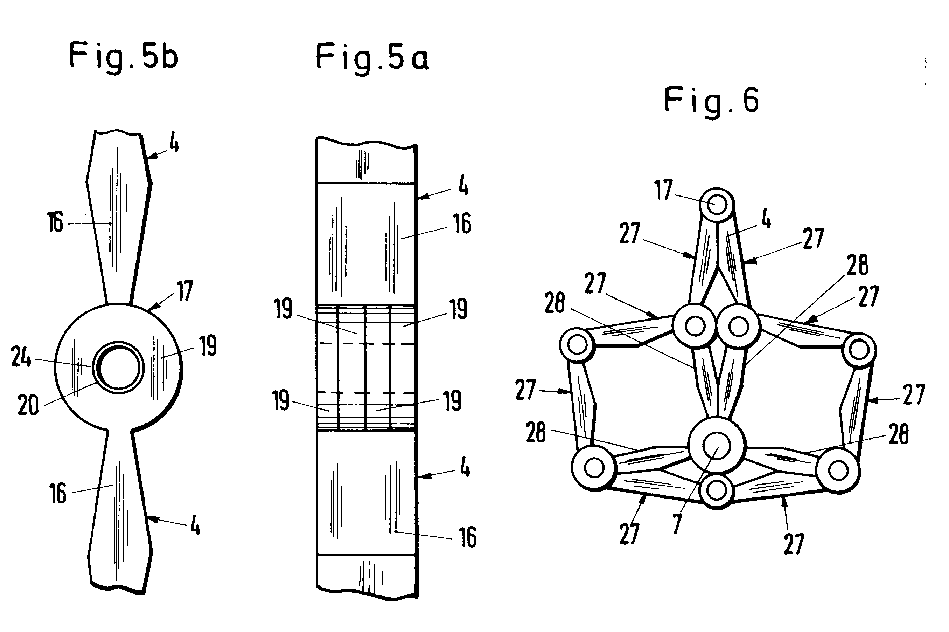

In den Figuren 5a und 5b sind zwei miteinander verbundene Wandelemente 4 dargestellt. An die in Seitenansicht rautenförmigen Mittelteile l6 (siehe Figur 5b) sind die Gelenkteile l7 angeformt, die aus mehreren parallel zueinander angeordneten und beabstandeten Scheiben l9 bestehen. Der Abstand der Scheibe l9 ist jeweils so gewählt, daß die Scheiben des einen Wandelementes 4 in die Zwischenräume des anderen Wandelementes 4 eingreifen und umgekehrt. Die Gelenkteile l7 werden durch eine in die zentrale Öffnung der Scheiben eingesetzte Gelenkhülse 20 miteinander verbunden und befestigt. Die rautenförmige Ausgestaltung der Mittelteile ist deswegen erforderlich, damit benachbarte Wandelemente sich mit einem Teil ihrer Wandflächen aneinanderlegen können, damit das Volumen der Arbeitskammern in Minimalstellung (z.B. Arbeitskammer llb oder lld in Figur l) möglichst klein wird.

In der Figur 6 ist die Ansicht des Gitters 5 mit Wandelementen 4 gemäß weiterer Ausführungsformen dargestellt. Die Gelenkteile l7, die mit jeweils nur einem weiteren Gelenkteil l7 verbunden sind, weisen einen geringeren Durchmesser auf als die Gelenkteile l7, die mit zwei weiteren Gelenkteilen l7 verbunden sind. Den größten Durchmesser besitzen die Gelenkteile l7, die in der Mitte angeordnet sind (im mittleren Punkt, der mit dem Befestigungspunkt 7 identisch ist).

Die acht außenliegenden Wandelemente 4 sind im Bereich der Gelenkteile l7 dadurch verstärkt ausgebildet, daß die Außenflächen 27 der Wandelemente 4 im wesentlichen als ebene Flächen ausgebildet sind.

Auch die vier innenliegenden Wandelemente 4 sind in den Bereichen 28 verstärkt ausgebildet.

In den Figuren 7a und 7b ist eine weitere Ausführungsform zweier miteinander verbundener Wandelemente 4 dargestellt. In der hier gezeigten Ausführungsform besteht der Mittelteil l6 aus zwei rautenförmigen Elementen 25, 26, von denen das Element 26 an den Gelenkteilen l7 nicht vollständig spitz zuläuft und so eine Verstärkung bildet.

In der Ausführungsform der Figur 7b besteht das obere Gelenkteil l7 aus einer einzigen Scheibe l9, an die der Gelenkbolzen 20 angeformt ist.

Wie in der Fig. 7b zu sehen ist, sind die rautenförmigen Elemente 25, 26 geteilt und gegeneinander versetzt angeordnet. Das untere Wandelement 4 ist mit seinen rautenförmigen Elementen 25, 26 an die Ausgestaltung des oberen Wandelements an gepaßt.

Für den Anwendungsbereich als Kraftstoffverbrennungsmaschine sind in der feststehenden Platte 2 die Einlaßöffnung l3a für das Zuführen des Kraftstoffes und die Auslaßöffnung l4a für das Abführen der Verbrennungsgase schraffiert eingezeichnet (s. Fig. l). Es kann sowohl der gesamte schraffierte Bereich als Einlaß- bzw. Auslaßöffnung benutzt werden als auch lediglich ein Flächenabschnitt. Die Position l5 markiert die Öffnung, in die die Zündeinrichtung, wie beispielsweise eine Zündkerze, eingesetzt wird.

Es besteht auch die Möglichkeit, die Einlaßöffnung im Bereich l3b vorzusehen und die Auslaßöffnung im Bereich l4b. Es hat sich jedoch gezeigt, daß die Bereiche l3a und l4a günstiger sind.

Wenn die erfindungsgemäße Maschine l als Pumpe, Dampfmaschine oder druckgetriebene Maschine eingesetzt wird, werden beide Einlaßöffnungen l3a und l3b und beide Auslaßöffnungen l4a und l4b benutzt.

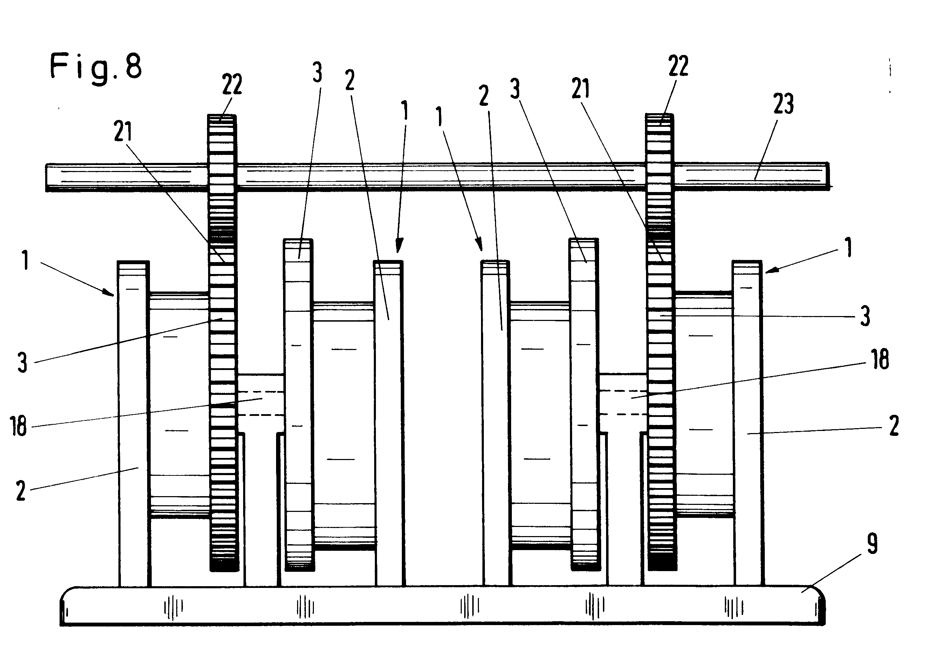

In der Figur 8 sind mehrere erfindungsgemäße Kraftstoffverbrennungsmotoren l jeweils paarweise zu einem Triebwerk zusammengesetzt. Jeweils zwei drehbare Platten 3 sind mit einer Welle l8 verbunden. Über Zahnräder 22, die direkt an den drehbaren Platten 3 angreifen, die in ihrer Außenkontur ebenfalls als Zahnräder 2l ausgebildet sind, kann eine gemeinsame Welle 23 angetrieben werden. Die paarweise verbundenen Motoren sind um 45° phasenverschoben, um eine ruhigere Bewegung zu erzielen.

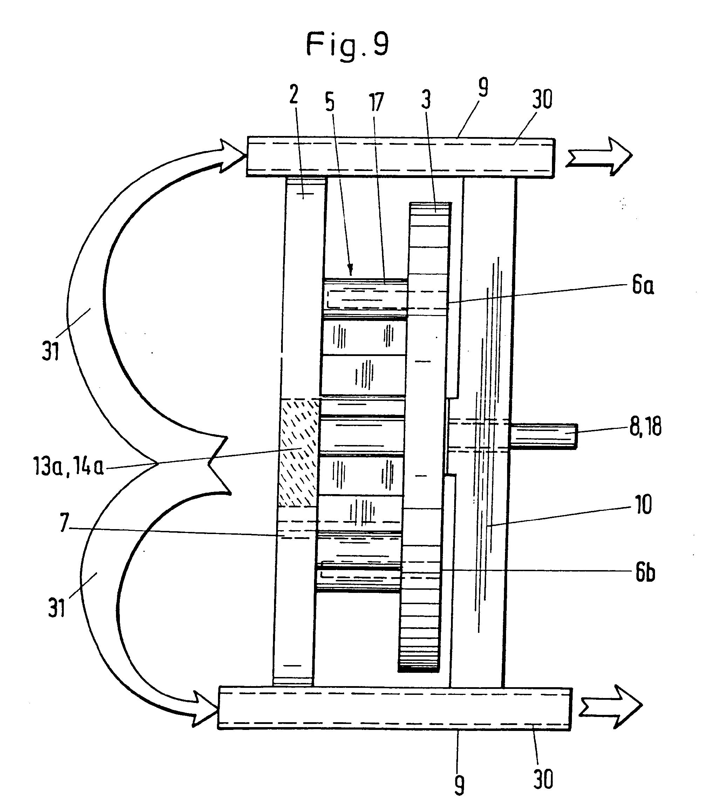

Die Figur 9 zeigt die Seitenansicht einer weiteren Ausführungsform der Maschine. Zusätzlich zur unteren Grundplatte 9 ist eine weitere obere Abstandsplatte 9 vorgesehen, wobei beide Platten mit Rohren 30 versehen und, durch die beim Betrieb als Verbrennungsmotor die heißen Abgase vom Auslaß l4b geführt werden. Dies ist in Figur 9 durch die Pfeile 3l dargestellt. Die heißen Abgase bewirken eine Längenausdehnung der Platten 9, so daß der Abstand zwischen den Platten 2, 3 an die Ausdehnung der Wandelemente 4 angepaßt ist.

## Patentansprüche

l. Arbeitsmaschine mit mindestens zwei Arbeitskammern (lla, b, c, d) mit veränderlichem Volumen und mindestens einer Einlaßöffnung (l3a, l3b) und einer Auslaßöffnung (l4a, l4b) für gasförmige oder flüssige Medien, einer ersten feststehenden Platte (2) und einer zweiten, parallel zur ersten Platte (2) angeordneten und zu dieser beabstandeten zweiten Platte (3) und einer Vielzahl von zwischen der ersten und zweiten platte angeordneten länglichen Wandelementen (4), die gleitend, abdichtend an der ersten und zweiten platte anliegen und zusammen mit der ersten und zweiten platte die Arbeitskammern (lla, b, c, d) bilden, dadurch gekennzeichnet, daß

– die zweite Platte (3) durch ihre zentrale Achse (8) bezüglich der ersten Platte (2) drehbar gelagert ist,
– ein bewegliches Gitter (5), das aus mindestens acht Wandelementen (4) gebildet ist, wobei jedes Wandelement (4) an seinen Endpunkten (l2) (Gelenkpunkten) mit mindestens einem weiteren Wandelement (4) gelenkig abdichtend verbunden ist, mit mindestens einem innenliegenden Endpunkt (7) an der ersten Platte (2) und mit mindestens zwei außenliegenden Endpunkten (6a, 6b) an der zweiten Platte (3) derart gelenkig abdichtend befestigt ist, daß bei Rotation der platte (3) die Arbeitskammern (lla, b, c, d) abwechselnd ihr minimales und maximales Volumen einnehmen, und
– eine Welle (l8) in der Drehachse der zweiten Platte (3) befestigt ist.

2. Maschine nach Anspruch l, dadurch gekennzeichnet, daß alle Wandelemente (4) die gleiche Baulänge aufweisen.

3. Maschine nach Anspruch l, dadurch gekennzeichnet, daß die Einlaßöffnung(en) (l3a, l3b) und die Auslaßöffnung(en) (l4a, l4b) in der ersten Platte (2) angebracht sind.

4. Maschine nach Anspruch l, dadurch gekennzeichnet, daß die Wandelemente (4) Hantelform aufweisen und aus einem länglichen Mittelteil (l6) bestehen, an dessen beiden Enden in den Gelenkpunkten (l2) je ein Gelenkteil (l7) angeformt ist.

5. Maschine nach Anspruch 4, dadurch gekennzeichnet, daß dieses Mittelteil (l6) in Seitenansicht rechteckig und in Draufsicht rautenförmig ausgebildet ist.

6. Maschine nach einem der Ansprüche 4 oder 5, dadurch gekennzeichnet, daß dieses Gelenkteil (l7) zylindrische Gestalt aufweist und aus mindestens einer Scheibe (l9) besteht, die derart ausgebildet und angeordnet ist, daß sie an mindestens einer Scheibe (l9) des/der Gelenkteils/teile eines oder mehrerer benachbarter Wandelemente (4) formschlüssig anliegt, so daß die jeweilige Arbeitskammer (lla, b, c oder d) abdichtend verschlossen ist.

7. Maschine nach einem der Ansprüche l bis 6, dadurch gekennzeichnet, daß das Mittelteil (l6) der im Gitter (5) außenliegenden Wandelemente (4) im Bereich der Gelenkteile (l7) verstärkt ausgebildet ist und daß die sich im Befestigungspunkt (7) befindlichen Gelenkteile (l7) einen größeren Durchmesser aufweisen als die übrigen Gelenkteile (l7).

8. Maschine nach einem der Ansprüche l bis 7, dadurch gekennzeichnet, daß zwölf Wandelemente (4) derart zu einem Gitter (5) zusammengebaut sind, daß vier Arbeitskammern (lla, b, c, d) gebildet sind.

9. Maschine nach Anspruch 8, dadurch gekennzeichnet, daß das Gitter (5) mit den Befestigungspunkten (6a, 6b, 7) derart an den platten (2, 3) befestigt ist, daß bei Rotation der platte (3) die punkte (6a, 6b) auf einem bezüglich des Punktes (7) erzentrischen Kreis A umlaufen.

I0. Maschine nach einem der Ansprüche 8 und 9, dadurch gekennzeichnet, daß der Abstand $d_l$ der Drehachse (8) der Platte (3) zum Befestigungspunkt (7) kleiner/gleich $\sqrt{L^2-R^2}$ -R ist, wobei L der Abstand zweier Gelenkpunkte (I2) eines Wandelementes (4) und R der Radius der Gelenkteile (I7) ist.

II. Maschine nach einem der Ansprüche 8 bis I0, dadurch gekennzeichnet, daß der Abstand $d_2$ der Befestigungspunkte (6a, 6b) gleich $2\sqrt{L^2-R^2}$ + 2R ist.

I2. Maschine nach einem der Ansprüche I bis II, dadurch gekennzeichnet, daß die Einlaßöffnungen (I3a, I3b) und die Auslaßöffnungen (I4a, I4b) durch die Wandelemente (4) verschließbar sind.

I3. Maschine nach einem der Ansprüche I bis I2, dadurch gekennzeichnet, daß Mittel vorgesehen sind, mit denen der Abstand zwischen der ersten und der zweiten platte (2, 3) unterschiedlich einstellbar sind.

I4. Maschine nach Anspruch I3, dadurch gekennzeichnet, daß beim Betrieb als Motor die heißen Abgase derart durch die Grundplatte (9) führbar sind, daß diese Grundplatte (9) sich in ihrer Länge ändert.

## Claims

1. A driving engine with at least two operating chambers (11a, b, c, d) of variable volume and at least one inlet opening (13a, 13b) and one outlet opening (14a, 14b) for gaseous or liquid media, a first stationary plate (2) and a second plate (3) arranged parallel to the first plate (2) and at a distance therefrom, and a plurality of elongate wall elements (4) which are arranged between the first and second plates and rest sliding against the first and second plates in a sealing manner and which together with the first and second plates form the operating chambers (11a, b, c, d), **characterized in that**
   – the second plate (3) is mounted so as to be rotatable through its central shaft (8) with respect to the first plate (2),
   – a movable lattice (5) which is formed from at least eight wall elements (4), each wall element (4) being connected in a sealed manner at its end points (12) (articulation points) to at least one further wall element (4) in an articulated manner, is secured in a sealed manner with at least one inward end point (7) to the first plate (2) and with at least two outward end points (6a, 6b) to the second plate (3) in an articulated manner in such a way that as plate (3) is rotated the operating chambers (11a, b, c, d) occupy their minimum and maximum volumes alternately, and
   – a shaft (18) is secured in the rotary axis of the second plate (3).

2. An engine according to Claim 1, **characterized in that** all the wall elements (4) have the same structural length.

3. An engine according to Claim 1, characterized in that the inlet opening or openings (13a, 13b) and the outlet opening or openings (14a, 14b) are provided in the first plate (2).

4. An engine according to Claim 1, **characterized in that** the wall elements (4) have a dumb-bell shape and comprise an elongate middle part (16), at both ends of which one articulation part (17) is integrally formed in each case in the articulation points (12).

5. An engine according to Claim 4, **characterized in that** the said middle part (16) is made rectangular in side elevation and rhomboid in plan view.

6. An engine according to one of Claims 4 or 5, **characterized in that** the said articulation part (17) has a cylindrical shape and comprises at least one disc (19) which is designed and arranged in such a way that it rests in a positively locking manner against at least one disc (19) of the articulation part or parts of one or more adjacent wall elements, so that the respective operating chamber (11a, b, c, d) is closed in a sealed manner.

7. An engine according to one of Claims 1 to 6, **characterized in that** the middle part (16) of the wall elements (4) lying on the outside in the lattice (5) is made reinforced in the region of the articulation parts (17), and the articulation parts (17) situated at the fastening point (7) have a larger diameter than the other articulation parts (17).

8. An engine according to one of Claims 1 to 7, **characterized in that** twelve wall elements (4) are combined to form a lattice (5) in such a way that four operating chambers (11a, b, c, d) are formed.

9. An engine according to Claim 8, **characterized in that** the lattice (5) with the fastening points (6a, 6b, 7) is secured to the plates (2, 3) in such a way that when plate (3) is rotated the points (6a, 6b) rotate in a circle A which is eccentric with respect to the point (7).

10. An engine according to one of Claims 8 and 9, **characterized in that** the distance $d_1$ of the shaft of rotation (8) of plate (3) from the fastening point (7) is smaller than or equal to $\sqrt{L^2-R^2}-R$, wherein **L** is the distance between two articulation points (12) of a wall element (4) and **R** is the radius of the articulation parts (17).

11. An engine according to one of Claims 8 to 10, **characterized in that** the distance $d_2$ of the fastening points (6a, 6b) is equal to $2\sqrt{L^2-R^2}+2R$.

12. An engine according to one of Claims 1 to 11, **characterized in that** the inlet openings (13a, 13b) and the outlet openings (14a, 14b) can be closed by the wall elements (4).

13. An engine according to one of Claims 1 to 12, **characterized in that** means are provided by which the distance between the first and the second plate (2, 3) can be adjusted so as to be different.

14. An engine according to Claim 13, **characterized in that** during operation as a motor the hot exhaust gases can be conveyed through the base plate (9) in such a way that the said base plate (9) varies in its length.

**Revendications**

1. Machine comportant au moins deux chambres de travail (11a,b,c,d) à volumes variables et au moins une ouverture d'admission (13a,13b) et une ouverture d'échappement (14a,14b), pour des milieux gazeux ou liquides, une première plaque fixe (2) et une deuxième plaque (3), parallèle à la première plaque (2) et espacée de celle-ci, et une pluralité d'éléments de paroi (4) allongés, disposés entre la première et la deuxième plaque, qui appuient en coulissant, de façon étanche, sur la première et la deuxième plaque et forment, conjointement avec la première et la deuxième plaque, les chambres de travail (11a,b,c,d), caractérisée en ce que
   – la deuxième plaque (3) est montée pivotante par rapport à la première plaque (2), au moyen de son axe central (8),
   – un réseau mobile (5), formé d'au moins huit éléments de paroi (4), où chaque élément de paroi (4) est relié, articulé de façon étanche, en ses points d'extrémité (12) (points d'articulation), avec au moins un autre élément de paroi (4), avec au moins un point d'extrémité intérieur (7), sur la première plaque (2), et avec au moins deux points d'extrémité extérieurs (6a,6b), sur la deuxième plaque (3), fixés articulés de façon étanche, de telle façon que, lors de la rotation de la plaque (3), les chambres de travail (11a,b,c,d) prennent alternativement leur volumes minimal et maximal, et
   – un arbre (18) est fixé dans l'axe de rotation de la deuxième plaque (3).

2. Machine selon la revendication 1, caractérisée en ce que tous les éléments de paroi (4) présentent la même longueur de construction.

3. Machine selon la revendication 1, caractérisée en ce que la ou les ouverture(s) d'admission (13a,13b) et la ou les ouverture(s) d'échappement (14a,14b) sont ménagées dans la première plaque (2).

4. Machine selon la revendication 1, caractérisée en ce que les éléments de paroi (4) présentent une forme en haltère et sont composés d'une partie centrale (16) allongée, à chacune des deux extrémités de laquelle une partie d'articulation (17) est formée, d'un seul tenant, dans les points d'articulation (12).

5. Machine selon la revendication 4, caractérisée en ce que cette partie centrale (16) est rectangulaire en vue de côté et en forme de losange, en vue de dessus.

6. Machine selon l'une des revendications 4 ou 5, caractérisée en ce que cette partie d'articulation (17) présente une forme cylindrique et est composée d'au moins un disque (19), réalisé et disposé de telle façon qu'il appuie, avec ajustement de forme, sur au moins un disque (19), de la ou des parties d'articulation d'un ou de plusieurs éléments de paroi (4) voisins, de sorte que la chambre de travail (11a,b,c, ou d) respective soit enclose de façon étanche.

7. Machine selon l'une des revendications 1 à 6, caractérisée en ce que la partie centrale (16) des éléments de paroi (4) extérieurs dans le réseau (5) est renforcée dans la zone des parties d'articulation (17), et en ce que les parties d'articulation (17) qui se trouvent au point de fixation (7) présentent un plus grand diamètre que les autres parties d'articulation (17).

8. Machine selon l'une des revendications 1 à 7, caractérisée en ce que douze éléments de paroi (4) sont assemblés en formant un réseau (5), de telle façon que sont formées quatre chambres de travail (11a, b, c, d).

9. Machine selon la revendication 8, caractérisée en ce que le réseau (5) avec les points de fixation (6a,6b,7) est fixé sur les plaques (2,3), de telle façon que, lors de la rotation de la plaque (3), les points (6a,6b) circulent sur un cercle A qui est excentré par rapport au point (7).

10. Machine selon l'une des revendications 8 et 9, caractérisée en ce que la distance $d_1$ entre l'axe de rotation (8) de la plaque (3) et le point de fixation (7) est inférieure/égale à $\sqrt{L^2-R^2}$ -R, où L est la distance entre deux points d'articulation (12) d'un élément de paroi (4) et R est le rayon des parties d'articulation (17).

11. Machine selon l'une des revendications 8 à 10, caractérisée en ce que la distance $d_2$ entre les points de fixation (6a,6b) est égale à $2\sqrt{L^2-R^2}$ + 2R.

12. Machine selon l'une des revendications 1 à 11, caractérisée en ce que les ouvertures d'admission (13a, 13b) et les ouvertures d'échappement (14a, 14b) sont susceptibles d'être obturées par les éléments de paroi (4).

13. Machine selon l'une des revendications 1 à 12, caractérisée en ce que sont prévus des moyens, à l'aide desquels la distance entre la première et la deuxième plaque (2,3) est réglable de façon différenciée.

14. Machine selon la revendications 13, caractérisée en ce que, lors du fonctionnement en moteur, les gaz d'échappement chauds sont susceptibles d'être guidés à travers la plaque de base (9), de telle façon que la longueur de cette plaque de base (9) varie.

# Fig.1

# Fig.2

EP 0 334 302 B1

Fig.3

Fig.4

EP 0 334 302 B1

Fig.5b    Fig.5a    Fig.6

EP 0 334 302 B1

## Fig.7a

## Fig.7b

Fig.8

# Fig.9